# EUROPEAN PATENT APPLICATION

(11) **EP 2 769 612 A1**
(43) Date of publication of application: **27.08.2014**
(21) Application number: 14151956.1
(22) Date of filing: 21.01.2014
(51) Int. Cl.: A01D 61/00, A01D 80/02

(54) **Frusto-conical conveyor with retracting fingers**

(30) Priority: 26.02.2013 US 201313777445
(71) Applicant: DEERE & COMPANY, Moline, Illinois 61265-8098 (US)
(72) Inventor: Berg, Amy C, Milan, IL Illinois 61264 (US); Lovett, Benjamin M, Colona, IL Illinois 61241 (US); Yanke, Bryan R, Eldridge, IA Iowa 52748 (US); White, Matthew R, Geneseo, IL Illinois 61254 (US); Washburn, Anthony J, Orion, IL Illinois 61273 (US)
(74) Representative: Holst, Sönke

(57) **Abstract**

A harvesting header (100) comprises a frame (101) having a rear aperture (138). Crop is harvested and fed towards and through the rear aperture (138). A conveyor drum (136) is mounted above and in front of the rear aperture (138). The conveyor drum (136) has a cylindrical section (144) and frusto-conical end sections (148) on both ends of the cylindrical section (144). Retractable fingers (146) extend outwards from the cylindrical section (144) and from each frusto-conical end section (148). The retractable fingers (146) extending from the frusto-conical end sections (148) are angled towards the side.

## Description

### Field

The present invention relates to agricultural combine harvesting machinery, and more particularly to draper platforms. Even more particularly it refers to upper outlet conveyors for such draper platforms.

### Background

Combines are large self-propelled vehicles used for harvesting and threshing agricultural crop in the field. A harvesting head is typically disposed across the front of the combine vehicle supported on a feederhouse. This harvesting head is configured to cut and convey the crop into the combine vehicle itself where it is threshed, separated, and cleaned.

Traditional harvesting heads included an elongate rigid frame to which harvesting implements are added such as row units, reciprocating knife assemblies, augers, reels, and endless belt conveyors. One such type of harvesting head is called a "draper platform" or "draper".

Draper platforms have an elongate frame on which are mounted left and right side endless belt conveyors mounted immediately behind a reciprocating knife. These endless conveyors convey cut crop material inward to a center portion of the draper platform, depositing them on a center conveyor that moves rearward. The center conveyor carries the material to and through an aperture at the rear of the draper platform frame, where it is deposited in an elevating conveyor called a feederhouse, which carries the cut crop material into the combine vehicle for threshing, separating and cleaning.

Above the mentioned aperture at the rear of the draper platform frame, a rotationally driven cylindrical conveyor drum with frusto-conical end sections may be provided for assisting the crop flow by undershot feeding, as shown for example in US 8,336,280 B2. While the central, cylindrical section of the conveyor drum is provided with movable fingers that extend and retract in a radial direction in order to engage into the crop at the front and to retract at the rear to release the crop entering the feederhouse, the frusto-conical sections of the conveyor drum are smooth, without fingers.

Under certain circumstances, for example in moist conditions, crop may stall and builds up at the frusto-conical section of the conveyor drum, since the smooth surface cannot provide a significant feeding action. Crop stalling in this area can lead to crop loss and stalling of the conveyor belt itself.

### Summary

A harvesting header for mounting on a feederhouse of an agricultural harvesting machine (for example a combine or a forage harvester) comprises an elongate frame extending generally perpendicularly to a direction of operational travel of the header and generally parallel to the ground. The frame has a rear aperture through which crop can be fed into the feederhouse of the harvesting machine. The header is also provided with harvesting elements for harvesting crop and conveying elements for conveying the harvested crop towards and through the rear aperture. A conveyor drum with a rotational axis extending generally perpendicularly to the direction of operational travel of the header is mounted above and in front of the rear aperture. The conveyor drum has a cylindrical section and frusto-conical end sections on both ends of the cylindrical section. Retractable fingers extend outwards from the cylindrical section of the conveyor drum. Additionally, at least one retractable finger extends outwards from each frusto-conical end section of the conveyor drum. The fingers extending from the frusto-conical end sections are angled towards the side.

In a preferred embodiment, a stationary shaft is mounted within the conveyor drum and positioned eccentric with respect to the rotational axis of the conveyor drum. The fingers have a proximal end rotationally supported on the shaft by a bearing and a distal section extending through a respective bearing in the conveyor drum.

The fingers extending from the frusto-conical end sections can be rotatably supported on their respective bearing around an axis extending orthogonally to the axis of the stationary shaft. The bearings of the fingers extending from the frusto-conical end sections can comprise spherical bearings.

The harvesting elements comprise an elongate reciprocating knife assembly. Such a header is preferably a cutting platform with conveying elements in the form of a transverse auger in which the recited conveyor drum constitutes the center of the auger, or it is a draper platform wherein the conveying elements comprise a first draper belt on a first side of the header conveying crop towards the center of the header, a second draper belt on a second side of the header conveying crop towards the center of the header, and a third draper belt at the center of the header conveying crop towards the rear and to the rear aperture, and wherein the conveyor drum is mounted above the third draper belt in front of the rear aperture. Other embodiments of the invention can have row units for harvesting corn ears or a pickup reel for collecting crop from the ground as harvesting elements. In both latter cases, the conveying elements preferably comprise a transverse auger in which the recited conveyor drum constitutes the center of the auger.

In one arrangement, a harvesting header is provided for mounting on a feederhouse of an agricultural harvesting machine that travels over ground, the harvesting header having a left end and a right end, the harvesting header the harvesting header comprising: a frame that is elongate and extends generally perpendicularly to a direction of operational travel of the harvesting header and generally parallel to the ground; a rear aperture in the frame through which crop can be fed into the feederhouse; harvesting elements for harvesting crop and conveying elements for conveying harvested crop towards and through the rear aperture; a conveyor drum with a rotational axis, wherein the conveyor drum extends generally perpendicularly to the direction of operational travel of the harvesting header, wherein the conveyor drum is mounted above and in front of the rear aperture, wherein the conveyor drum has a cylindrical section with a left end and a right end and has a frusto-conical end section on the left end of the cylindrical section and has a frusto-conical end section on the right end of the cylindrical section; retractable fingers extending outwards from the cylindrical section of the conveyor drum; a first retractable finger that extends outwards from the frusto-conical end section on the left end of the conveyor drum and is angled toward the left end of the harvesting header; and a second retractable finger that extends outward from the frusto-conical end section on the right end of the conveyor drum and is angled toward the right end of the harvesting header.

A stationary shaft may be mounted within the conveyor drum and positioned eccentric with respect to the rotational axis of the conveyor drum, and each of the retractable fingers may have a proximal end rotationally supported on the stationary shaft by a first bearing associated with said each retractable finger and a distal section extending through a second bearing disposed at the conveyor drum.

The first retractable finger may be pivotally supported on a third bearing to pivot about an axis that extends orthogonally to an axis of the stationary shaft, and the second retractable finger may be pivotally supported on a fourth bearing to pivot about the axis that extends orthogonally to the axis of the stationary shaft.

The second bearing may be a spherical bearing.

The harvesting elements may comprise an elongate reciprocating knife assembly.

The conveying elements may comprise a left side endless belt conveyor, a right side endless belt conveyor and a center endless belt conveyor at a center of the harvesting header conveying crop towards the rear and to the rear aperture.

### Brief Description of the Drawings

Figure 1 is a perspective view of a harvesting header in accordance with the present invention.
Figure 2 is a perspective, partially cut-away view of an end section of the conveyor drum of the header of Fig. 1 with outwardly extending fingers.

### Detailed Description

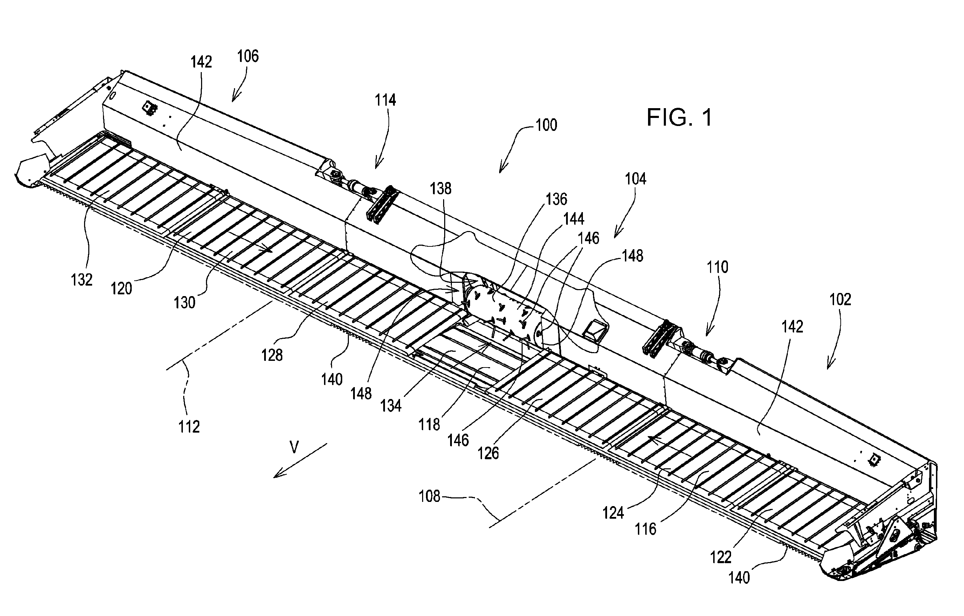

The terms "front", "in front of', "forward", "fore-and-aft", "rear", "behind", "rearward", and the like as used herein are made in reference to "V" (Fig. 1), which is the direction of travel through the field during normal, straight-line, harvesting operations. The direction of travel is horizontal and perpendicular to the longitudinal extent of the harvesting header 100 which is embodied as a draper platform. The terms "transverse" "side-to-side", and the like refer to a direction generally parallel to the longitudinal extent of the header. This direction is horizontal and transverse to the direction of travel "V" of the header.

The harvesting header 100 comprises a frame 101 that is elongate and extends laterally (i.e. perpendicular to the direction of travel "V"). The frame 101 further comprises a left frame section 102, a center frame section 104, and a right frame section 106. The left frame section 102, the center frame section 104, and the right frame section 106 are coupled to one another and extend linearly, laterally and horizontally in an end-to-end relationship. Left frame section 102 pivots about a generally horizontal and forwardly extending axis 108 with respect to center frame section 104. This axis is defined by pivot joint 110. Pivot joint 110 couples the left frame section 102 and center frame section 104 together and constrains them to pivot about axis 108. Right frame section 106 pivots about a generally horizontal and forwardly extending axis 112 with respect to center frame section 104. This axis is defined by pivot joint 114. Pivot joint 114 couples the right frame section 106 and center frame section 104 together and constrains them to pivot with respect to each other about axis 112.

Harvesting header 100 further comprises a left side endless belt conveyor 116, a center endless belt conveyor 118, and a right side endless belt conveyor 120. Left side endless belt conveyor 116 is comprised of three separate endless conveyor belts 122, 124, 126. Right side endless belt conveyor 120 is comprised of three separate endless conveyor belts 128, 130, 132. Endless conveyor belts 122, 124, 126, 128, 130, 132 have upper surfaces that are coplanar and are driven by motors (not shown) to carry cut crop material laterally inwardly in the direction (indicated by the arrows that are superimposed on the conveyors) toward the center portion of harvesting header 100, where they deposit their cut crop material onto endless conveyor belt 134 of center endless belt conveyor 118. Endless conveyor belt 134 is driven by a motor (not shown) to carry cut crop material rearwardly in the direction indicated by the arrow superimposed on endless conveyor belt 134. Endless conveyor belt 134 carries the cut crop material rearward and underneath a conveyor drum 136. Conveyor drum 136, in turn, carries the cut crop material rearward on the upwardly facing top surface of the endless conveyor belt 134, through a rear aperture 138 disposed at a central region of the rear wall of harvesting header 100. Cut crop material passing through the rear aperture 138 is received in a feederhouse (not shown) of an agricultural harvesting machine, in particular a combine (also not shown) in the conventional manner.

An elongate reciprocating knife assembly 140 is disposed along the leading edge of the harvesting header 100, extending substantially the entire width of the harvesting header 100. The elongate reciprocating knife assembly 140 is configured to sever crop plants near their roots, permitting the upper portion of the crop plant to fall on the left side endless belt conveyor 116, center endless belt conveyor 118 and right side endless belt conveyor 120. A reel (not shown) is disposed above the elongate reciprocating knife assembly 140 and is configured to engage the tops of the crop plants, gently pushing them rearward such that they fall onto left side endless belt conveyor 116, center endless belt conveyor 118, and right side endless belt conveyor 120.

Back sheets 142 extend generally vertically from the rear edge of endless conveyor belts 122, 124, 126, 128, 130, 132. These back sheets 142 serve as a backstop or barrier to prevent cut crop material from passing completely across harvesting header 100 and falling on the ground. Back sheets 142 terminate at the rear aperture 138 and define the opposing sides of the rear aperture 138.

The conveyor drum 136 comprises a cylindrical section 144. The cylindrical section 144 has a transversely extending axis. A number of retractable fingers 146 are distributed around the length and circumference of the cylindrical section 144. The conveyor drum 136 has a frusto-conical end section 148 at each lateral end of the cylindrical section 144. The frusto-conical end sections 148 are also provided with retractable fingers 146.

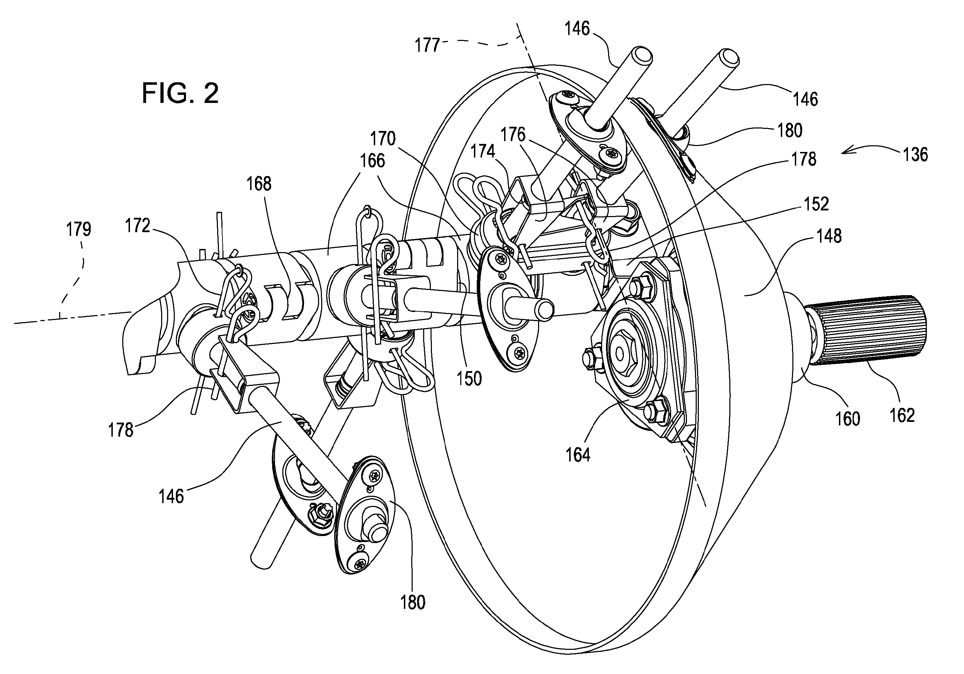

Fig. 2 shows an enlarged perspective view of the left end of the conveyor drum 136. The cylindrical section 144 is removed in Fig. 2 for the sake of showing the interior of the conveyor drum 136. Within the interior of conveyor drum 136, a stationary shaft 150 is provided. Stationary shaft 150 is mounted eccentric (i.e. radially offset) with respect to the rotation axis of conveyor drum 136. stationary shaft 150 is connected with its end to a support member 152. Support member 152 is fixed at one end to a hollow shaft 160 extending to the outside of the frusto-conical end section 148 and there fixedly (or in a circumferential direction adjustably) mounted to the center frame section 104, such that the position of the stationary shaft 150 within the conveyor drum 136 can be held fixed or can be adjusted in the circumferential direction to adjust the time and location at which the retractable fingers 146 engage the crop.

A drive shaft 162 extends through hollow shaft 160 and is connected to support disks or spiders (not shown) in the interior of the conveyor drum 136 for setting the conveyor drum 136 into a rotational motion, in Fig. 1 in the counter-clock sense during normal operation. A bearing 164 supports the drive shaft 162 on the hollow shaft 160. The support arrangement for the stationary shaft 150 is provided on the other end of the conveyor drum 136 in a mirrored manner.

Each one of the retractable fingers 146 is rotatably supported on the stationary shaft 150 by a bearing 166 associated that finger. Each bearing 166 comprises two halves that are held together on one end by a pivot joint 168 and on the other end by a sleeve 170 and a retaining pin 172, as described in US 6,158,571 A1. However, any other suitable type of bearing 166 can be used. The retractable fingers 146 further have a radially protruding retaining rib 174. A retainer 176 having a bore is slid over each retractable finger 146 and fixed to the retractable finger 146 by another retaining pin 178 in order to prevent a retractable finger 146 from being completely detached from the bearing 166 if the finger breaks. Each retractable finger 146 extends through a bearing 180 that is associated with that retractable finger 146. Each bearing 180 is a spherical bearing which permits the retractable finger 146 to both pivot and slide in and out with respect to the surface of the conveyor drum 136.

Each one of the retractable fingers 146 is thus rotatably supported with their inner, proximal ends on the stationary shaft 150 by a bearing 166 associated with that retractable finger 146. The outer, distal end of each retractable finger 146 extends through a bearing 180 associated with the retractable finger. The stationary shaft 150 is usually positioned such that the retractable fingers 146 extend and retract from the outer surface of the conveyor drum 136 to engage into the crop at the front of the conveyor drum and to retract at the rear of the conveyor drum to release the crop as it enters the feederhouse.

At least one (outer) retractable finger 146, respectively, extends through each frusto-conical end section 148 of the conveyor drum 136. The retractable finger 146 of the frusto-conical end section 148 is angled towards the side, i.e. towards the right hand side in Fig. 2. The retractable finger 146 is supported on the stationary shaft 150, like all others of the retractable fingers 146 of the conveyor drum 136 and retracts and extends in unison with others of the retractable fingers 146. The retractable finger 146 of the frusto-conical end section 148 is mounted at an angle to its respective bearing 166, be it fixed or movable around the axis 177 of a retaining pin 178 that also connects a retainer 176 of the retractable finger 146 of the frusto-conical end section 148 to a retainer 176 of an adjacent one of the retractable fingers 146, as shown. The axis 177 of the retaining pin 178 extends orthogonally to the axis 179 of the stationary shaft 150.

During operation, the retractable fingers 146 of the frusto-conical end sections 148 feed crop, in particular crop coming from the left side endless belt conveyor 116 and right side endless belt conveyor 120 towards the rear aperture 138 and avoid undesired build-up of crop material at the frusto-conical end sections 148.

Having described the preferred embodiments, it will become apparent that various modifications can be made without departing from the scope of the invention as defined in the accompanying claims.

## Claims

1. A harvesting header (100) for mounting on a feederhouse of an agricultural harvesting machine that travels over ground, the harvesting header (100) having a left end and a right end, the harvesting header (100) comprising:
a frame (101) that is elongate and extends generally perpendicularly to a direction of operational travel of the harvesting header (100) and generally parallel to the ground;
a rear aperture (138) in the frame (101) through which crop can be fed into the feederhouse;
harvesting elements for harvesting crop and conveying elements for conveying harvested crop towards and through the rear aperture (138);
a conveyor drum (136) with a rotational axis, wherein the conveyor drum (136) extends generally perpendicularly to the direction of operational travel of the harvesting header (100), wherein the conveyor drum (136) is mounted above and in front of the rear aperture (138), wherein the conveyor drum (136) has a cylindrical section (144) with a left end and a right end and has a frusto-conical end section (148) on the left end of the cylindrical section (144) and has a frusto-conical end section (148) on the right end of the cylindrical section;
retractable fingers (146) extending outwards from the cylindrical section (144) of the conveyor drum (136);
a first retractable finger (146) that extends outwards from the frusto-conical end section (148) on the left end of the conveyor drum (136) and is angled toward the left end of the harvesting header; and
a second retractable finger (146) that extends outward from the frusto-conical end section (148) on the right end of the conveyor drum (136) and is angled toward the right end of the harvesting header.

2. The harvesting header (100) according to claim 1, wherein a stationary shaft (150) is mounted within the conveyor drum (136) and positioned eccentric with respect to the rotational axis of the conveyor drum (136), wherein each of the retractable fingers (146) has a proximal end rotationally supported on the stationary shaft (150) by a first bearing (166) associated with said each retractable finger (146) and a distal section extending through a second bearing (180) disposed at the conveyor drum.

3. The harvesting header (100) according to claim 2, wherein the first retractable finger (146) is pivotally supported on a third bearing (166) to pivot about an axis (177) that extends orthogonally to an axis of the stationary shaft (150), and further wherein the second retractable finger (146) is pivotally supported on a fourth bearing (166) to pivot about the axis (177) that extends orthogonally to the axis of the stationary shaft.

4. The harvesting header (100) according to claim 2, wherein the second bearing (180) is a spherical bearing.

5. The harvesting header (100) according to claim 1, wherein the harvesting elements comprise an elongate reciprocating knife assembly (140).

6. The harvesting header (100) according to claim 1, wherein the conveying elements comprise a left side endless belt conveyor (116), a right side endless belt conveyor (120) and a center endless belt conveyor (118) at a center of the harvesting header (100) conveying crop towards the rear and to the rear aperture (138).
